# EUROPÄISCHE PATENTSCHRIFT

(11) **EP 4 077 070 B1**
(45) Veröffentlichungstag und Bekanntmachung des Hinweises auf die Patenterteilung: **02.08.2023**
(21) Anmeldenummer: 21700916.6
(22) Anmeldetag: 18.01.2021
(51) Int. Cl.: B60S 3/04, B08B 3/02

(54) **VORRICHTUNG UND VERFAHREN ZUM AUFBRINGEN EINER REINIGUNGSFLÜSSIGKEIT AUF EIN FAHRZEUGTEIL**
DEVICE AND METHOD FOR APPLYING A CLEANING FLUID TO A VEHICLE PART
DISPOSITIF ET PROCÉDÉ D'APPLICATION D'UN FLUIDE DE NETTOYAGE SUR UN ÉLÉMENT DE VÉHICULE

(30) Priorität: 30.01.2020 DE 102020102289
(43) Veröffentlichungstag der Anmeldung: 26.10.2022
(73) Patentinhaber: WashTec Holding GmbH, 86153 Augsburg (DE)
(72) Erfinder: CONRAD, Ferdinand, 86159 Augsburg (DE)
(74) Vertreter: Reitstötter Kinzebach
(86) Internationale Anmeldenummer: PCT/EP2021/050905
(87) Internationale Veröffentlichungsnummer: WO 2021/151698

(56) Entgegenhaltungen:
- DE-U1- 9 000 427
- JP-A- 2000 317 412
- JP-U- H0 516 529

## Beschreibung

Die vorliegende Erfindung betrifft eine Vorrichtung zum Aufbringen einer Reinigungsflüssigkeit auf ein Fahrzeugteil. Die Vorrichtung umfasst eine obere Düse zum Ausstoßen von Reinigungsflüssigkeit in einer ersten Sprühgeometrie. Die erste Sprühgeometrie ist in einem ersten vertikalen Querschnitt ausgehend von der oberen Düse von einem ersten oberen Schenkel und einem ersten unteren Schenkel begrenzt, die einen ersten Öffnungswinkel miteinander einschließen. Ferner betrifft die Erfindung ein Verfahren zum Aufbringen einer Reinigungsflüssigkeit auf ein Fahrzeugteil sowie eine Fahrzeugwaschanlage mit einer solchen Vorrichtung. Die Vorrichtung und das Verfahren sind insbesondere ausgebildet, Reinigungsflüssigkeit auf eine Fahrzeugfelge aufzubringen.

Aus der DE 90 00 427 U1 ist eine Radwaschvorrichtung bekannt, die insbesondere für Räder von Lastkraftwagen geeignet ist. Dabei sollen insbesondere für unterschiedliche Radformen optimale Waschergebnisse erzielt werden. Dies wird dadurch erreicht, dass die Radwaschvorrichtung einen Mantel aufweist, der einen Waschkopf umgibt. Dieser Mantel besteht aus einem elastischen Material. Der Mantel wird für den Waschvorgang an das Fahrzeugrad angelegt, so dass um den Waschkopf ein im Wesentlichen geschlossener Waschraum gebildet wird. Der Mantel verhindert, dass Reinigungsmittel an die Karosserie gelangt. Zum Aufbringen der Reinigungsflüssigkeit wird eine zentrale Düse verwendet. Zum Aufbringen von Spülflüssigkeit wird eine sich drehende Ringdüse verwendet.

Aus der DE 35 18 297 C2 ist ein Felgenreinigungsgerät für Autowaschanlagen bekannt. Bei diesem Felgenreinigungsgerät wird mittels einer ortsfest installierten Sprühdüse Reinigungsflüssigkeit auf die Fahrzeugfelge gesprüht. Anschließend wird eine Waschbürste der Felge zugestellt, mittels welcher die Fahrzeugfelge gereinigt wird. Die Sprühgeometrie der ausgestoßenen Reinigungsflüssigkeit weist dabei in einem vertikalen Querschnitt, in welchem die Achse der Felge und die Düse liegt, einen oberen Schenkel auf, welcher, ausgehend von der Düse, schräg nach oben in Richtung des oberen Teils der Fahrzeugfelge gerichtet ist, und einen unteren Schenkel auf, welcher schräg nach unten in Richtung des unteren Teils der Fahrzeugfelge gerichtet ist.

Bei Fahrzeugwaschanlagen ergibt sich das Problem, dass der horizontale Abstand der Düse von der Fahrzeugfelge in Querrichtung des Fahrzeugs variieren kann. Üblicherweise ist dieser horizontale Abstand der Fahrzeugfelge von der Düse bei Fahrzeugen mit großer Spurweite kleiner als bei Fahrzeugen mit geringerer Spurweite. Gleichzeitig haben Fahrzeuge mit großer Spurweite üblicherweise einen größeren Felgendurchmesser als Fahrzeuge mit geringerer Spurweite. Dies führt dazu, dass in einer Fahrzeugwaschanlage große Fahrzeugfelgen einen geringeren horizontalen Abstand von der Düse haben als kleinere Fahrzeugfelgen.

Da die Sprühgeometrie der Düse im vertikalen Querschnitt Schenkel aufweist, die einen Öffnungswinkel einschließen, ist die besprühte Fläche kleiner, wenn sich die Fahrzeugfelge horizontal näher an der Düse befindet, und größer, wenn sich die Fahrzeugfelge horizontal weiter entfernt von der Düse befindet. Dies führt in einer Fahrzeugwaschanlage dazu, dass bei großen Fahrzeugfelgen, welche an sich eine größere zu reinigende Fläche aufweisen, der Sprühstrahl eine kleinere Fläche beaufschlagt, und eine kleinere Fahrzeugfelge, welche an sich eine kleinere zu reinigende Fläche aufweist, der Sprühstrahl eine größere Fläche mit Reinigungsflüssigkeit beaufschlagt. Je nach Öffnungswinkel der Sprühgeometrie führt dies dazu, dass entweder die große Fahrzeugfelge nicht vollständig mit Reinigungsflüssigkeit besprüht wird oder Reinigungsflüssigkeit an der kleineren Fahrzeugfelge vorbei gesprüht wird. Beide Szenarien sind nachteilig.

Zur Lösung dieses Problems wird in der WO 2012/028346 A1 eine Vorrichtung und ein Verfahren zum Aufbringen von Reinigungsflüssigkeit auf ein Rad eines Fahrzeugs vorgeschlagen, bei denen die Sprühdüse zum Bewegen zwischen einer radfernen Ruhestellung und einer in einem Sprühabstand vom Rad entfernten Sprühstellung an einer bewegbaren Zustellvorrichtung angeordnet wird. Die Sprühdüse wird dabei insbesondere so bewegt, dass sie einen bestimmten gewünschten Sprühabstand vom Rad einnimmt. Um den gewünschten Sprühabstand zu ermitteln, wird der Abstand des Rads zur Vorrichtung bestimmt und dann die Sprühdüse die Sprühstellung bewegt, bei der sie den gewünschten Sprühabstand vom Rad hat. Anschließend wird Reinigungsflüssigkeit mit der Sprühdüse auf das Rad aufgesprüht und dabei die Sprühdüse in Waschrichtung entlang des Rads bewegt.

Nachteilig an dieser Vorrichtung und diesem Verfahren ist, dass eine zustellbare Sprühdüse eine aufwendige und somit teurere und wartungsintensive Konstruktion der Vorrichtung erfordert. Ferner ist es in diesem Fall erforderlich, den Abstand des Rads bzw. der Fahrzeugfelge von der Sprühdüse zu ermitteln und eine Zustellvorrichtung in Abhängigkeit von diesem Abstand in horizontaler Richtung zu steuern. Auch hierdurch entstehen höhere Kosten bei der Herstellung und Wartung der Vorrichtung.

Der vorliegenden Erfindung liegt daher die Aufgabe zugrunde, eine Vorrichtung und ein Verfahren der eingangs genannten Art bereitzustellen, mit welchen Reinigungsflüssigkeit auf ein Fahrzeugteil, insbesondere eine Fahrzeugfelge oder ein Fahrzeugrad, so aufgebracht werden kann, dass das Fahrzeugteil unabhängig vom horizontalen Abstand des Fahrzeugteils von der Düse mit Reinigungsflüssigkeit beaufschlagt werden kann. Dabei soll das Fahrzeugteil möglichst vollständig mit Reinigungsflüssigkeit beaufschlagt werden und die Menge der Reinigungsflüssigkeit, welche nicht auf das Fahrzeug trifft, soll so gering wie möglich sein.

Erfindungsgemäß wird diese Aufgabe durch eine Vorrichtung mit den Merkmalen des Anspruchs 1 und ein Verfahren mit den Merkmalen des Anspruchs 14 gelöst. Vorteilhafte Ausgestaltungen und Weiterbildungen ergeben sich dabei aus den abhängigen Ansprüchen.

Die erfindungsgemäße Vorrichtung umfasst zusätzlich zu der oberen Düse eine untere Düse zum Ausstoßen von Reinigungsflüssigkeit in einer zweiten Sprühgeometrie, die in einem zweiten vertikalen Querschnitt ausgehend von der unteren Düse von einem zweiten oberen Schenkel und einem zweiten unteren Schenkel begrenzt ist, die einen zweiten Öffnungswinkel miteinander einschließen. Dabei ist die obere Düse in vertikaler Richtung beabstandet oberhalb von der unteren Düse angeordnet. Ferner schließt in einer vertikalen Projektion eine durch den ersten oberen Schenkel verlaufende erste Gerade mit einer durch den zweiten unteren Schenkel verlaufenden zweiten Gerade einen Winkel ein, der kleiner als 10 Grad ist, und der erste untere Schenkel schneidet den zweiten oberen Schenkel in Ausstoßrichtung der Reinigungsflüssigkeit.

Der vertikale Querschnitt definiert dabei insbesondere eine Ebene, in welcher sich eine Ausstoßöffnung der oberen bzw. unteren Düse befindet und in welcher sich ausgestoßene Flüssigkeitsvolumina dieser Düse bewegen. Bei der Düse wird die Richtung und Geschwindigkeit definiert, mit welcher die einzelnen Flüssigkeitsvolumina ausgestoßen werden. Diese Parameter hängen dabei von der Geometrie der Düse sowie dem Druck der Reinigungsflüssigkeit bei der Düse ab. Die Sprühgeometrie definiert, welche Bereiche ausgestoßene Flüssigkeitsvolumina erreichen bzw. durch welche Bereiche sich ausgestoßene Flüssigkeitsvolumina bewegen. Treffen die Flüssigkeitsvolumina auf eine zu reinigende Fläche, ergibt sich eine besprühte Fläche, welche sich aus der Sprühgeometrie und der Anordnung der zu reinigenden Fläche relativ zur Düse ergibt.

In dem vertikalen Querschnitt wird die Sprühgeometrie von zwei Schenkeln bestimmt, welche einen Öffnungswinkel einschließen. Dabei wird als Näherung unterstellt, dass die Schenkel gerade sind. Aufgrund der Schwerkraft sind die Schenkel jedoch tatsächlich leicht nach unten gebogen. Die Biegung hängt dabei von der Ausstoßgeschwindigkeit der Flüssigkeitsvolumina und den Eigenschaften der Reinigungsflüssigkeit ab. Als Näherung kann angenommen werden, dass die Ausrichtung der annähernd als gerade betrachteten Schenkel mit der Tangente des tatsächlich leicht gebogenen Schenkels bei der Austrittsöffnung der Düse zusammenfällt.

Die obere Düse ist oberhalb der unteren Düse angeordnet. Falls die obere Düse keinen horizontalen Versatz senkrecht zum vertikalen Querschnitt relativ zur unteren Düse aufweist, d. h. falls die obere Düse in dieser horizontalen Richtung direkt oberhalb der unteren Düse angeordnet ist, fällt der erste vertikale Querschnitt mit dem zweiten vertikalen Querschnitt zusammen. Nur falls die obere Düse in dieser horizontalen Richtung horizontal versetzt zu der unteren Düse angeordnet ist, ist der erste vertikale Querschnitt zwar parallel zu dem zweiten vertikalen Querschnitt, jedoch horizontal versetzt zu diesem. Ein solcher Versatz ist bei der vorstehend genannten vertikalen Projektion unbeachtlich. Befindet sich die obere Düse direkt oberhalb der unteren Düse, und fallen somit der erste und der zweite vertikale Querschnitt zusammen, ist die vertikale Projektion gleich dem ersten bzw. zweiten vertikalen Querschnitt.

Da bei der erfindungsgemäßen Vorrichtung der erste obere Schenkel im Wesentlichen parallel zu dem zweiten unteren Schenkel ist, trifft ein Flüssigkeitsvolumen, welches sich entlang dem ersten oberen Schenkel bewegt, nicht auf ein Flüssigkeitsvolumen, welches sich auf dem zweiten unteren Schenkel bewegt. Der erste obere Schenkel schneidet sich mit dem zweiten unteren Schenkel somit nur in einer gedachten Verlängerung entweder in Ausstoßrichtung der Reinigungsflüssigkeit oder entgegen der Ausstoßrichtung der Reinigungsflüssigkeit, je nachdem, wie der Winkel des jeweiligen Schenkels zur Horizontalen ist. Schneiden sich die erste und zweite Gerade in Ausstoßrichtung der Reinigungsflüssigkeit, bewegen sich Flüssigkeitsvolumina auf diesen Schenkeln vertikal aufeinander zu. Schneiden sich die erste und die zweite Gerade umgekehrt entgegen der Ausstoßrichtung der Reinigungsflüssigkeit, bewegen sich Flüssigkeitsvolumina auf diesen Schenkeln in vertikaler Richtung voneinander weg. Verlaufen der erste obere Schenkel und der zweite untere Schenkel parallel, verändert sich der vertikale Abstand von auf diesen Schenkeln ausgestoßenen Flüssigkeitsvolumina nicht.

Der Winkel, den die erste und die zweite Gerade einschließen, ist insbesondere kleiner als 5 Grad, bevorzugt kleiner als 3 Grad. Besonders bevorzugt ist der Winkel 0 Grad. In diesem Fall verlaufen die ersten und zweite Gerade und damit der erste obere Schenkel und der zweite untere Schenkel parallel zueinander.

Ein Flüssigkeitsvolumen, welches sich entlang dem ersten unteren Schenkel bewegt, trifft auf ein Flüssigkeitsvolumen, welches sich auf dem zweiten oberen Schenkel bewegt. Der horizontale Abstand des Schnittpunkts des ersten unteren Schenkels mit dem zweiten oberen Schenkel hängt dabei von den Öffnungswinkeln der ersten und zweiten Sprühgeometrie ab. Die erfindungsgemäße Vorrichtung hat den Vorteil, dass durch die Anordnung der unteren und oberen Düse und durch die Sprühgeometrien dieser Düsen in einem horizontalen Abstand von den Düsen ein Bereich gebildet wird, in dem eine Fläche eines zu reinigenden Fahrzeugteils bzw. das Fahrzeugteil so mit Reinigungsflüssigkeit beaufschlagt werden kann, dass bei einer Veränderung des horizontalen Abstands des Fahrzeugteils von den Düsen in diesem Bereich die gewünschte Fläche des Fahrzeugteils bzw. das Fahrzeugteil vollständig mit Reinigungsflüssigkeit beaufschlagt wird, ohne dass Reinigungsflüssigkeit an dieser Fläche bzw. dem Fahrzeugteil vorbei gesprüht wird.

Im Folgenden wird davon ausgegangen, dass das Fahrzeugteil mit Reinigungsflüssigkeit besprüht werden soll. In gleicher Weise ist es jedoch auch möglich, dass nicht das vollständige Fahrzeugteil sondern nur ein bestimmter Flächenbereich bzw. eine bestimmte Fläche des Fahrzeugteils mit Reinigungsflüssigkeit besprüht werden soll. Der zu besprühende Bereich bzw. die so besprochene Fläche entspricht in diesem Fall hinsichtlich der Größe und Ausrichtung dem Fahrzeugteil.

Gemäß einer Ausgestaltung der erfindungsgemäßen Vorrichtung fallen der erste und der zweite vertikale Querschnitt zusammen. Die Düsen sind somit in vertikaler Richtung beabstandet, nicht jedoch in der horizontalen Richtung, die senkrecht zu dem vertikalen Querschnitt ist.

Gemäß einer anderen Ausgestaltung kann der erste vertikale Querschnitt auch beabstandet von dem zweiten vertikalen Querschnitt angeordnet sein. Dabei ist der erste vertikale Querschnitt insbesondere parallel zu dem zweiten vertikalen Querschnitt ausgerichtet. Die Düsen sind in diesem Fall sowohl in vertikaler Richtung als auch in horizontaler Richtung beabstandet voneinander angeordnet. Sie sind somit horizontal versetzt zueinander angeordnet.

Erfindungsgemäß ist der erste obere Schenkel horizontal ausgerichtet. Alternativ oder zusätzlich ist der zweite untere Schenkel horizontal ausgerichtet. Ein Flüssigkeitsvolumen, das so ausgestoßen wird, dass es sich entlang des ersten oberen bzw. entlang des zweiten unteren Schenkels bewegt, verändert somit seine Höhe nicht, sofern man die Veränderung der Trajektorie aufgrund der Schwerkraft vernachlässigt. Ein solches Flüssigkeitsvolumen trifft somit auf das zu reinigende Fahrzeugteil in der Höhe der Düse, und zwar unabhängig vom Abstand des Fahrzeugteils von dieser Düse (sofern man erneut die Veränderung der Trajektorie aufgrund der Schwerkraft vernachlässigt).

Bei einer weiteren Ausgestaltung der erfindungsgemäßen Vorrichtung sind der erste obere Schenkel und der zweite untere Schenkel parallel zueinander ausgerichtet. In diesem Fall wird zwischen den beiden Schenkeln ein Bereich in einer zu den Schenkeln senkrechten Richtung gebildet, in welchem ein Fahrzeugteil unabhängig von seinem Abstand die Reinigungsflüssigkeit beaufschlagt wird. In dem Teil dieses Bereichs, der außerdem jenseits des Schnittpunkts des ersten unteren Schenkels mit dem zweiten oberen Schenkel liegt, wird das zu reinigende Fahrzeugteil sogar vollständig mit Reinigungsflüssigkeit beaufschlagt.

Der erste und/oder zweite Öffnungswinkel ist insbesondere in einem Bereich von 30 Grad bis 50 Grad, bevorzugt in einem Bereich von 35 Grad bis 45 Grad. Die beiden Öffnungswinkel müssen dabei jedoch nicht gleich sein. Aus diesen Öffnungswinkeln ergibt sich ein Schnittpunkt des ersten unteren Schenkels mit dem zweiten oberen Schenkel in einem horizontalen Abstand von den Düsen, der kleiner als der übliche horizontale Abstand der zu reinigenden Oberfläche von den Düsen in einer Fahrzeugwaschanlage ist.

Gemäß einer weiteren Ausgestaltung der erfindungsgemäßen Vorrichtung ist der zweite untere Schenkel horizontal ausgerichtet und der erste obere Schenkel ist um einen Winkel nach unten geneigt, der in einem Bereich von 6 Grad bis 10 Grad liegt. Dieser Winkel ist insbesondere 8 Grad. Wenn die Vorrichtung in einer Fahrzeugwaschanlage eingesetzt wird, in welcher Fahrzeuge mit unterschiedlichen Felgengrößen bzw. Radgrößen gereinigt werden, ergibt sich bei dieser Ausgestaltung vorteilhafterweise eine verbesserte Beaufschlagung von Fahrzeugfelgen unterschiedlicher Größe mit Reinigungsflüssigkeit. Durch die horizontale Ausrichtung des zweiten unteren Schenkels schneidet dieser nämlich unabhängig von der Radgröße in etwa immer den unteren Rand der Fahrzeugfelge, sofern die untere Düse vertikal entsprechend angeordnet ist. Der erste obere Schenkel trifft hingegen auf das Fahrzeugrad bzw. die Fahrzeugfelge in einer vertikalen Position, die vom horizontalen Abstand des Fahrzeugrads von den Düsen abhängt. Da in einer Fahrzeugwaschanlage üblicherweise jedoch kleinere Fahrzeugfelgen horizontal weiter weg von den Düsen angeordnet sind als größere Fahrzeugfelgen und da der erste obere Schenkel somit auf kleinere Fahrzeugfelgen weiter unten trifft als auf größere Fahrzeugfelgen, werden die Unterschiede hinsichtlich der Größe und des horizontalen Abstands der Fahrzeugfelgen von den Düsen durch die Neigung des ersten oberen Schenkels vorteilhafterweise ausgeglichen.

Gemäß einer Ausgestaltung der Vorrichtung sind die Düsen in Bezug auf die Vorrichtung stationär. Die Düsen können somit zwar gemeinsam mit der Vorrichtung bewegt werden. Diese Bewegung kann insbesondere eine Translation sein, bei der die Düsen einem sich bewegenden Fahrzeugrad folgen. Die Düsen führen jedoch insbesondere keine Schwenk- oder Rotationsbewegungen aus.

Gemäß einer weiteren Ausgestaltung der erfindungsgemäßen Vorrichtung sind die Düsen rotierbar um eine Achse angeordnet, welche horizontal ausgerichtet ist. Die Achse liegt insbesondere in dem vertikalen Querschnitt. Insbesondere schneidet die Achse dabei den Schnittpunkt des ersten unteren Schenkels mit dem zweiten oberen Schenkel. Vorteilhafterweise kann in diesem Fall eine Fläche mit Reinigungsflüssigkeit mittels der Düsen besprüht werden, welche in der zu der Achse senkrechten Ebene kreisscheibenförmig ist. Die zusammengesetzte Sprühgeometrie in dem vertikalen Querschnitt bzw. des ersten und zweiten vertikalen Querschnitts, welche sich aus der ersten Sprühgeometrie und der zweiten Sprühgeometrie zusammensetzt, ist in diesem Fall insbesondere spiegelsymmetrisch. Die Spiegelsymmetrieebene ist dabei senkrecht zu dem vertikalen Querschnitt bzw. dem ersten und zweiten vertikalen Querschnitt. Sie schneidet außerdem den Schnittpunkt des ersten unteren Schenkels mit dem zweiten oberen Schenkel.

Die obere bzw. untere Düse ist insbesondere eine Vollkegeldüse und/oder eine Flachstrahldüse. Bevorzugt ist die obere und die untere Düse eine Vollkegeldüse oder es ist die obere und die untere Düse eine Flachstrahldüse.

Die vorliegende Erfindung betrifft des Weiteren eine Fahrzeugwaschanlage mit der vorstehend beschriebenen Vorrichtung. Die Vorrichtung dient in diesem Fall der Reinigung zumindest einer Felge eines zu reinigenden Fahrzeugs. In diesem Fall entspricht insbesondere der vertikale Abstand der oberen Düse von der unteren Düse dem Durchmesser der zu reinigenden Felge und der Abstand der oberen Düse vom Boden dem Abstand der oberen Kante der Felge vom Boden sowie der Abstand der unteren Düse vom Boden dem Abstand der unteren Kante der Felge vom Boden.

Bei der vertikalen Positionierung der Düsen kann von einem Standarddurchmesser oder einem Durchschnittsdurchmesser einer Felge und eines Rades ausgegangen werden, so dass ein solches Durchschnittsrad mit einer solchen Durchschnittsfelge in einem bestimmten horizontalen Abstandsbereich, unabhängig vom horizontalen Abstand, vollständig mit Reinigungsflüssigkeit besprüht wird, ohne dass Reinigungsflüssigkeit an der Felge vorbeigesprüht wird.

Bei der Ausgestaltung der erfindungsgemäßen Vorrichtung, bei welcher der zweite untere Schenkel horizontal ausgerichtet ist und der erste obere Schenkel um einen Winkel nach unten geneigt ist, können wie vorstehend beschrieben auch Fahrzeugfelgen unterschiedlicher Größe vollständig mit Reinigungsflüssigkeit beaufschlagt werden, ohne dass Reinigungsflüssigkeit an der jeweiligen Felge vorbeigesprüht wird.

Gemäß einer anderen Ausgestaltung kann der Durchmesser der Felge und die vertikale Position der Felge über dem Boden bestimmt werden, z. B. detektiert werden oder in Form von Daten übertragen werden. In Abhängigkeit von dieser Größe und Position der Felge können die vertikalen Positionen der Düsen dann eingestellt werden. Die Düsen können in diesem Fall beispielsweise vertikal verfahren werden. Auf diese Weise können Felgen unterschiedlicher Größen, welche sich in unterschiedlichen Abständen vom Boden befinden, in einem bestimmten horizontalen Bereich unabhängig vom horizontalen Abstand von den Düsen so mit Reinigungsflüssigkeit besprüht werden, dass sie vollständig mit Reinigungsflüssigkeit beaufschlagt werden, ohne dass Reinigungsflüssigkeit neben die Felgen gesprüht wird.

Die Erfindung betrifft des Weiteren ein Verfahren zum Aufbringen einer Reinigungsflüssigkeit auf ein Fahrzeugteil, bei dem mittels einer oberen Düse Reinigungsflüssigkeit in einer ersten Sprühgeometrie in Richtung des zu reinigenden Fahrzeugteils ausgestoßen wird, wobei die erste Sprühgeometrie in einem ersten vertikalen Querschnitt ausgehend von der oberen Düse von einem ersten oberen Schenkel und einem ersten unteren Schenkel begrenzt ist, die einen ersten Öffnungswinkel miteinander einschließen, und mittels einer unteren, vertikal von der oberen Düse beabstandeten Düse Reinigungsflüssigkeit in einer zweiten Sprühgeometrie in Richtung des zu reinigenden Fahrzeugteils ausgestoßen wird, wobei die zweite Sprühgeometrie in einem zweiten vertikalen Querschnitt ausgehend von der unteren Düse von einem zweiten oberen Schenkel und einem zweiten unteren Schenkel begrenzt ist, die einen zweiten Öffnungswinkel miteinander einschließen. Dabei schließt in einer vertikalen Projektion eine durch den ersten oberen Schenkel verlaufende erste Gerade mit einer durch den zweiten unteren Schenkel verlaufenden zweiten Geraden einen Winkel ein, der kleiner als 10 Grad, insbesondere kleiner als 5 Grad, ist, und der erste untere Schenkel schneidet den zweiten oberen Schenkel in Ausstoßrichtung der Reinigungsflüssigkeit, wobei der erste obere Schenkel und/oder der zweite untere Schenkel horizontal ausgerichtet ist/sind.

Das erfindungsgemäße Verfahren kann insbesondere von der erfindungsgemäßen Vorrichtung ausgeführt werden. Es weist dieselben Vorteile wie die erfindungsgemäße Vorrichtung auf.

Gemäß einer Weiterbildung des erfindungsgemäßen Verfahrens wird oder werden die vertikale Position einer oberen Kante des zu reinigenden Fahrzeugteils und/oder die vertikale Position einer unteren Kante des zu reinigenden Fahrzeugteils bestimmt, und die vertikale Position der oberen Düse wird so eingestellt, dass sie der vertikalen Position der oberen Kante des zu reinigenden Fahrzeugteils entspricht, und/oder die vertikale Position der unteren Düse wird so eingestellt, dass sie der vertikalen Position der unteren Kante des zu reinigenden Fahrzeugteils entspricht. Auf diese Weise kann die vertikale Position einer Düse oder beider Düsen an den vertikalen Bereich des zu reinigenden Fahrzeugteils angepasst werden, wobei jedoch der horizontale Abstand des Fahrzeugteils von den Düsen variieren kann, ohne dass Reinigungsflüssigkeit an dem Fahrzeugteil vorbeigespritzt wird oder Bereiche des Fahrzeugteils nicht mit Reinigungsflüssigkeit beaufschlagt werden.

Gemäß einer Ausgestaltung des erfindungsgemäßen Verfahrens trifft der erste untere Schenkel oberhalb der unteren Kante des zu reinigenden Fahrzeugteils auf das zu reinigende Fahrzeugteil. Alternativ oder zusätzlich trifft der zweite obere Schenkel insbesondere unterhalb der oberen Kante des zu reinigenden Fahrzeugteils auf das zu reinigende Fahrzeugteil. Auf dem zu reinigenden Fahrzeugteil wird somit ein Bereich gebildet, bei welchem nur von der oberen Düse ausgestoßene Reinigungsflüssigkeit auftrifft, und ein Bereich gebildet, auf den nur von der unteren Düse ausgestoßene Reinigungsflüssigkeit auftrifft. Dazwischen ist ein Bereich gebildet, auf den Reinigungsflüssigkeit trifft, der sowohl von der oberen Düse als auch der unteren Düse ausgestoßen wurde. Auf diese Weise wird zuverlässig erreicht, dass das zu reinigende Fahrzeugteil vollständig mit Reinigungsflüssigkeit beaufschlagt wird, jedoch keine Reinigungsflüssigkeit an dem zu reinigenden Fahrzeugteil vorbeigesprüht wird.

Falls die obere und die untere Düse in einer zu dem ersten oder zweiten Querschnitt senkrechten Richtung versetzt angeordnet sind und sich das Fahrzeugteil entlang dieser Richtung relativ zu den Düsen bewegt, werden die Düsen bei dem erfindungsgemäßen Verfahren insbesondere so angesteuert, dass Reinigungsflüssigkeit über die Düsen zeitversetzt ausgestoßen wird. Hierdurch kann sichergestellt werden, dass die relative Lage des Fahrzeugteils zu der Düse, über welche Reinigungsflüssigkeit ausgestoßen wird, jeweils in der zu dem ersten oder zweiten Querschnitt senkrechten Richtung gleich ist. Diese Richtung ist insbesondere horizontal in Längsrichtung, d. h. Bewegungsrichtung, eines Fahrzeugs ausgerichtet.

Die Erfindung wird nun anhand von Ausführungsbeispielen mit Bezug zu den Zeichnungen erläutert.
- Figur 1: zeigt einen vertikalen Querschnitt eines Ausführungsbeispiels der erfindungsgemäßen Vorrichtung, die von den Düsen erzeugte Sprühgeometrie und ein zu reinigendes Fahrzeugteil und
- Figur 2: zeigt ein Ausführungsbeispiel einer Fahrzeugwaschanlage mit dem Ausführungsbeispiel der erfindungsgemäßen Vorrichtung als Teilansicht in einem vertikalen Querschnitt.

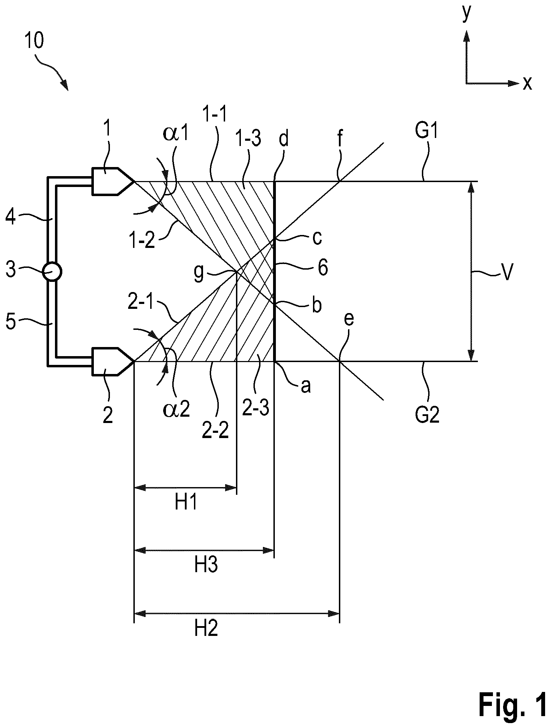

Mit Bezug zu Figur 1 wird ein Ausführungsbeispiel der erfindungsgemäßen Vorrichtung 10 beschrieben:
Die Vorrichtung 10 umfasst eine erste Düse 1 und eine zweite Düse 2. Die Düsen 1 und 2 sind Flachstrahldüsen. Bei anderen Ausführungsbeispielen sind jedoch auch andere Düsenarten einsetzbar. Über eine zentrale Versorgungsleitung 3 wird der ersten Düse 1 über eine erste Versorgungsleitung 4 und der zweiten Düse 2 über eine zweite Versorgungsleitung 5 Reinigungsflüssigkeit unter Druck zugeführt. Diese Reinigungsflüssigkeit wird bei den Ausstoßöffnungen der Düsen 1 und 2 mit jeweils einer bestimmten Sprühgeometrie ausgestoßen.

Die erste Düse 1 ist in vertikaler Richtung y beabstandet oberhalb der zweiten Düse 2 angeordnet. Bei dem Ausführungsbeispiel ist die erste Düse 1 direkt oberhalb der zweiten Düse 2 angeordnet. Sie weist in horizontaler Richtung, d. h. der x-Richtung und der zur Zeichenebene der Fig. 1 senkrechten z-Richtung, keinen Versatz auf. Die erste Düse 1 wird somit auch als obere Düse 1 und die zweite Düse wird auch als untere Düse 2 bezeichnet. Der Abstand V der oberen Düse 1 von der unteren Düse 2 in vertikaler Richtung y wird in Abhängigkeit von der vertikalen Erstreckung des zu reinigenden Fahrzeugteils 6 gewählt.

Bei dem Fahrzeugteil 6 handelt es sich insbesondere um die Felge 7 eines Fahrzeugs. In gleicher Weise kann es sich jedoch auch um einen Schweller oder ein beliebiges anderes Fahrzeugteil 6 handeln. Das Fahrzeugteil erstreckt sich insbesondere senkrecht zur x-Richtung. Im Folgenden wird davon ausgegangen, dass das Fahrzeugteil 6 mit Reinigungsflüssigkeit besprüht werden soll. In gleicher Weise ist es jedoch auch möglich, dass nicht das Fahrzeugteil insgesamt, sondern nur ein bestimmter Flächenbereich des Fahrzeugteils mit Reinigungsflüssigkeit besprüht werden soll. Der zu besprühende Bereich entspricht in diesem Fall hinsichtlich der Größe und Ausrichtung dem Fahrzeugteil 6, wie es in Fig. 1 dargestellt ist.

In Fig. 1 ist ein vertikaler Querschnitt entlang der x-y-Ebene gezeigt, welcher die Austrittsöffnungen der Düsen 1 und 2 schneidet. In diesem Querschnitt entlang der x-y-Ebene ist die erste Sprühgeometrie 1-3 ausgehend von der oberen Düse 1 bzw. der Austrittsöffnung der oberen Düse 1 von einem ersten oberen Schenkel 1-1 und einem ersten unteren Schenkel 1-2 begrenzt. Die beiden Schenkel 1-1 und 1-2 schließen dabei in der x-y-Ebene den ersten Öffnungswinkel α1 miteinander ein. In Abhängigkeit von dem Typ der Düse kann optional Reinigungsflüssigkeit nicht nur im Wesentlichen entlang der x-y-Ebene ausgestoßen werden, sondern zusätzlich auch in anderen Richtungen.

Der von den Düsen 1 und 2 besprühte Bereich in einer y-z-Ebene ist bei einer Flachstrahldüse rechteckig. Bei anderen Düsentypen kann dieser Bereich jedoch auch einen kreisförmigen oder elliptischen Umfang aufweisen.

Bei dem Ausführungsbeispiel der Vorrichtung ist der erste obere Schenkel 1-1 horizontal, d. h. in x-Richtung, ausgerichtet. Der erste untere Schenkel 1-2 schließt bei der Austrittsöffnung der oberen Düse 1 einen Winkel von 41 Grad mit dem ersten oberen Schenkel 1-1 in der x-y-Ebene ein, so dass dieser erste untere Schenkel 1-2 nach schräg unten in der x-y-Ebene ausgerichtet ist.

Befindet sich in einem horizontalen Abstand in x-Richtung ein zu reinigendes Fahrzeugteil 6, dessen zu reinigende Fläche in dem vertikalen Schnitt entlang der x-y-Ebene entlang der y-Richtung verläuft, in einem horizontalen Abstand H3 von der Austrittsöffnung der oberen Düse 1 entfernt, wird dieses Fahrzeugteils 6 mit der über die obere Düse 1 ausgestoßene Reinigungsflüssigkeit beaufschlagt. Diese Fläche reicht von dem Schnittpunkt d des ersten oberen Schenkels 1-1 mit dem Fahrzeugteil 6 bis hinunter zu dem Schnittpunkt b des ersten unteren Schenkels 1-2 mit dem Fahrzeugteil 6. In vertikaler y-Richtung ist die Länge dieser mit Reinigungsflüssigkeit beaufschlagten Fläche somit H3 * tan (α1). Die Länge des mit Reinigungsflüssigkeit beaufschlagten Bereichs des Fahrzeugteils 6 in vertikaler y-Richtung hängt somit vom horizontalen Abstand H3 in x-Richtung des Fahrzeugteils 6 von der Austrittsöffnung der oberen Düse 1 ab.

Die untere Düse 2 stößt Reinigungsflüssigkeit mit einer zweiten Sprühgeometrie 2-3 aus. Die zweite Sprühgeometrie 2-3 ist in dem vertikalen Querschnitt entlang der x-y-Ebene ausgehend von der unteren Düse 2 bzw. der Austrittsöffnung der unteren Düse 2 von einem zweiten oberen Schenkel 2-1 und einem zweiten unteren Schenkel 2-2 begrenzt. Die Schenkel 2-1 und 2-2 schließen dabei einen Öffnungswinkel α2 miteinander ein. Innerhalb dieses Winkels α2 wird in der x-y-Ebene Reinigungsflüssigkeit ausgestoßen. In Abhängigkeit vom Typ der Düse kann ggf. Reinigungsflüssigkeit zusätzlich auch noch in anderen Richtungen ausgestoßen werden.

Bei dem in der Fig. 1 gezeigten Ausführungsbeispiel ist der zweite untere Schenkel 2-2 in der vertikalen x-y-Ebene horizontal in x-Richtung ausgerichtet. Der zweite obere Schenkel 2-1 schließt den Winkel α2 mit dem zweiten unteren Schenkel 2-2 ein, wobei er von der Austrittsöffnung der unteren Düse 2 in der x-y-Ebene schräg nach oben verläuft, so dass er den ersten unteren Schenkel 1-2 bei dem Schnittpunkt g schneidet, bevor er auf das Fahrzeugteil 6 trifft. Die Öffnungswinkel α1 und α2 sind somit in Abhängigkeit von dem horizontalen Abstand H3 in x-Richtung des Fahrzeugteils von den Austrittsöffnungen der Düsen 1 und 2 so gewählt, dass sich dieser Schnittpunkt in horizontaler x-Richtung vor dem Fahrzeugteil 6 befindet.

Der vom Fahrzeugteil 6 mit Reinigungsflüssigkeit der unteren Düse 2 beaufschlagte Bereich in vertikaler y-Richtung reicht bei dem vertikalen Querschnitt der x-y-Ebene unten von dem Schnittpunkt a des horizontalen in x-Richtung ausgerichteten zweiten unteren Schenkels 2-2 mit dem Fahrzeugteil 6 nach oben bis zu dem Schnittpunkt c des zweiten oberen Schenkels 2-1 mit dem Fahrzeugteil 6. Die Länge dieses Bereichs in vertikaler y-Richtung ist dabei H3 * tan (α2).

Von dem Schnittpunkt a des zweiten unteren Schenkels 2-2 mit dem Fahrzeugteil 6 bis zum Schnittpunkt b des ersten unteren Schenkels 1-2 mit dem Fahrzeugteil 6 wird das Fahrzeugteil 6 in y-Richtung bei dem vertikalen Querschnitt entlang der x-y-Ebene nur von Reinigungsflüssigkeit besprüht, welche über die untere Düse 2 ausgestoßen wurde. Von dem Schnittpunkt b bis zum Schnittpunkt c, bei welchem der zweite obere Schenkel 2-1 das Fahrzeugteil 6 schneidet, wird das Fahrzeugteil in y-Richtung sowohl von Reinigungsflüssigkeit besprüht, welche über die untere Düse 2 ausgestoßen wurde, als auch von Reinigungsflüssigkeit, welche über die obere Düse 1 ausgestoßen wurde. Von dem Schnittpunkt c bis zu dem Schnittpunkt d, bei welchem der erste obere Schenkel 1-1 das Fahrzeugteil 6 schneidet, wird das Fahrzeugteil 6 in y-Richtung nur von Reinigungsflüssigkeit besprüht, welche von der oberen Düse 1 ausgestoßen wurde.

Erstreckt sich das Fahrzeugteil 6 von dem Schnittpunkt a bis zum Schnittpunkt d, oder soll nur der Bereich zwischen dem Schnittpunkt a und dem Schnittpunkt d in y-Richtung mit Reinigungsflüssigkeit beaufschlagt werden, wird keine über die Düsen 1 und 2 ausgestoßene Reinigungsflüssigkeit an dem Fahrzeugteil 6 bzw. dem zu reinigenden Bereich des Fahrzeugteils 6 vorbeigesprüht. Dieser Bereich, in dem keine Reinigungsflüssigkeit an einem Fahrzeugteil 6 vorbeigesprüht wird, reicht bis zu einem horizontalen Abstand H2 des Fahrzeugteils 6 von den Austrittsöffnungen der Düsen 1 und 2 in x-Richtung. Dieser horizontale Abstand H2 reicht bis zu dem Schnittpunkt e des ersten unteren Schenkels 1-2 mit dem zweiten unteren Schenkel 2-2 oder dem Schnittpunkt f des zweiten oberen Schenkels 2-1 mit dem ersten oberen Schenkel 1-2, je nachdem, welcher der Schnittpunkte e oder f in horizontaler x-Richtung näher an den Austrittsöffnungen der Düsen 1 und 2 gelegen ist. Erst ab einem horizontalen Abstand in x-Richtung, der größer als der Abstand H2 ist, wird Reinigungsflüssigkeit entweder unten oder oben an dem Fahrzeugteil 6 vorbeigesprüht.

Andererseits wird das Fahrzeugteil 6 bzw. der Bereich zwischen den Schnittpunkten a und d in y-Richtung des Fahrzeugteils vollständig mit Reinigungsflüssigkeit beaufschlagt, wobei in dem Bereich zwischen den Schnittpunkten b und c eine größere Menge auf das Fahrzeugteil 6 trifft, da in diesem Bereich sowohl Reinigungsflüssigkeit von der oberen Düse 1 als auch Reinigungsflüssigkeit von der unteren Düse 2 auf das Fahrzeugteil 6 trifft. Diese vollständige Abdeckung des Fahrzeugteils 6 ist solange gegeben, bis der horizontale Abstand H1 in x-Richtung des Fahrzeugteils 6 von den Austrittsöffnungen der Düsen 1 und 2 unterschritten wird. Dieser horizontale Abstand H1 in x-Richtung ist der horizontale Abstand in x-Richtung des Schnittpunkts g des ersten unteren Schenkels 1-2 mit dem zweiten oberen Schenkel 2-1 von den Austrittsöffnungen der Düsen 1 und 2.

Wird das Fahrzeugteil 6 in horizontaler x-Richtung näher als der Abstand H1 an die Düsen 1 und 2 heranbewegt, ergibt sich in der Mitte ein Bereich, welcher nicht mit Reinigungsflüssigkeit beaufschlagt wird. Im Ergebnis ergibt sich jedoch in horizontaler x-Richtung zwischen den Abständen H1 und H2 ein Toleranzbereich, in welchem sich ein senkrecht zur x-Richtung ausgerichtetes Fahrzeugteil 6 befinden kann, welches einerseits vollständig mit Reinigungsflüssigkeit beaufschlagt wird und wobei andererseits keine Reinigungsflüssigkeit an dem Fahrzeugteil 6 vorbei gesprüht wird. Kann sichergestellt werden, dass sich das Fahrzeugteil 6 in x-Richtung in diesem Bereich befindet, ist es nicht erforderlich, den Abstand des Fahrzeugteils 6 von den Austrittsöffnungen der Düsen 1 und 2 in x-Richtung zu verändern, um einerseits sicherzustellen, dass das Fahrzeugteil 6 vollständig mit Reinigungsflüssigkeit beaufschlagt wird und um andererseits zu vermeiden, dass Reinigungsflüssigkeit an dem Fahrzeugteil 6 vorbeigesprüht wird.

Bei dem in der Fig. 1 gezeigten Ausführungsbeispiel befinden sich die Austrittsöffnungen der Düsen 1 und 2 in x-Richtung bei derselben Position. Bei anderen Ausführungsbeispielen ist es möglich, dass die Austrittsöffnungen der Düsen 1 und 2 in x-Richtung versetzt zueinander angeordnet sind. Ist beispielsweise die untere Düse 2 in x-Richtung näher an dem Fahrzeugteil 6 angeordnet, verändern sich die Positionen der Schnittpunkte g und f. In einem solchen Fall kann der Öffnungswinkel α2 so angepasst werden, dass sich der Schnittpunkt f in x-Richtung bei derselben Position wie der Schnittpunkt e befindet. In diesem Fall verschiebt sich zwar die Position des Schnittpunktes g in x-Richtung. Weiterhin wird jedoch in horizontaler x-Richtung ein Bereich gebildet, in welchem das Fahrzeugteil 6 positioniert sein kann, ohne dass Reinigungsflüssigkeit vorbeigesprüht wird, wobei gleichzeitig das Fahrzeugteil 6 vollständig mit Reinigungsflüssigkeit beaufschlagt wird.

Bei weiteren Ausführungsbeispielen kann alternativ oder zusätzlich die Austrittsöffnung der einen Düse in z-Richtung, d. h. senkrecht zur der in Fig. 1 dargestellten Ebene eines vertikalen Querschnitts, versetzt zu der Austrittsöffnung der anderen Düse angeordnet sein. In diesem Fall fallen die vertikalen Querschnitte in der x-y-Ebene durch die Austrittsöffnungen der oberen Düse 1 bzw. der unteren Düse 2 nicht zusammen. Es ergibt sich ein erster vertikaler Querschnitt durch die Austrittsöffnung der oberen Düse 1 und ein zweiter vertikaler Querschnitt durch die untere Düse 2. Diese Querschnitte sind parallel zueinander. In diesem Fall würden sich die Sprühgeometrien 1-3 und 2-3 nicht schneiden, da die betrachteten Querschnitte parallel zueinander und beabstandet voneinander sind. Betrachtet man in diesem Fall jedoch eine vertikale Projektion entlang der z-Richtung auf eine x-y-Ebene, ergibt sich erneut die in Fig. 1 wiedergegebene Darstellung, bei der sich die Schenkel der Sprühgeometrien 1-3 und 2-3 schneiden, so dass in diesem Fall die vorstehenden Angaben für eine solche vertikale Projektion gelten.

Der Druck, der von Seiten der Versorgungsleitungen 4 und 5 an den Düsen 1 und 2 anliegt, ist so groß, dass sich ein Flüssigkeitsvolumen, welches von der oberen Düse 1 bei der Austrittsöffnung ausgestoßen wird, näherungsweise auf einer Geraden entlang des ersten oberen Schenkels 1-1, des ersten unteren Schenkels 1-2 oder einer beliebigen anderen Geraden im Bereich des Öffnungswinkels α1 bis zum Fahrzeugteil 6 bewegt. Die Ablenkung nach unten aufgrund der Schwerkraft ist dabei vernachlässigbar. Gleichermaßen bewegt sich ein Flüssigkeitsvolumen, welches sich von der unteren Düse 2 bei der Austrittsöffnung ausgestoßen wird, näherungsweise auf einer Geraden entlang des zweiten oberen Schenkels 2-1, des zweiten unteren Schenkels 2-2 oder einer beliebigen anderen Geraden im Bereich des Öffnungswinkels α2 in Richtung des Fahrzeugteils 6. Auch in diesem Fall ist eine Absenkung des Flüssigkeitsvolumens nach unten aufgrund der Schwerkraft vernachlässigbar.

Bei weiteren Ausführungsbeispielen ist es möglich, dass sich der erste obere Schenkel 1-1 zwar parallel zu dem zweiten unteren Schenkel 2-2 erstreckt, die beiden Schenkel 1-1 und 2-2 jedoch nicht horizontal in x-Richtung ausgerichtet sind, sondern einen Winkel mit der x-Richtung einschließen. Eine solche Ausrichtung der Schenkel 1-1 und 2-2 wird insbesondere dann gewählt, wenn sich die zu reinigende Fläche des Fahrzeugteils 6 nicht senkrecht zur x-Richtung erstreckt, d. h. bei dem in Fig. 1 gezeigten Querschnitt in y-Richtung verläuft, sondern einen Winkel mit der y-Richtung einschließt. Der Winkel, den die Schenkel 1-1 und 2-2 mit der x-Richtung einschließen, ist in diesem Fall insbesondere so gewählt, dass die Schenkel 1-1 und 2-2 senkrecht auf das Fahrzeugteil 6 bzw. die zu reinigende Fläche des Fahrzeugteils 6 treffen. Auch in diesem Fall ergibt sich dann in einer Richtung, die denselben Winkel mit der x-Richtung einschließt, wie die Schenkel 1-1 und 2-2, für das Fahrzeugteil 6 in dieser Richtung ein Toleranzbereich, in dem das Fahrzeugteil 6 vollständig besprüht wird, jedoch keine Reinigungsflüssigkeit an dem Fahrzeugteil 6 vorbei gesprüht wird.

Bei noch weiteren Ausführungsbeispielen erstreckt sich der erste obere Schenkel 1-1 nicht exakt parallel zu dem zweiten unteren Schenkel 2-2. In diesem Fall ergibt sich in dem in Fig. 1 gezeigten Querschnitt in der x-y-Ebene bzw. bei der vorstehend beschriebenen vertikalen Projektion auf eine solche Ebene ein Winkel zwischen einer durch den ersten oberen Schenkel 1-1 verlaufenden ersten Gerade G1 mit einer durch den zweiten unteren Schenkel 2-2 verlaufenden zweiten Geraden G2. Der Schnittpunkt der Geraden G1 und G2, bei dem dieser Winkel gebildet ist, kann entweder in Ausstoßrichtung der Reinigungsflüssigkeit oder entgegen der Ausstoßrichtung der Reinigungsflüssigkeit sein. Dieser Winkel ist erfindungsgemäß kleiner als 10 Grad, insbesondere kleiner als 5 Grad, bevorzugt kleiner als 3 Grad. Bei derart kleinen Winkeln ergibt sich in horizontaler x-Richtung zwar kein Toleranzbereich mehr, in dem keine Reinigungsflüssigkeit an dem Fahrzeugteil 6 vorbeigesprüht wird und gleichzeitig das Fahrzeugteil 6 vollständig mit Flüssigkeit beaufschlagt wird, unabhängig vom horizontalen Abstand in x-Richtung des Fahrzeugteils 6 von den Düsen 1 und 2, jedoch ergibt sich in x-Richtung zumindest ein Bereich, in dem nur wenig Reinigungsflüssigkeit an dem Fahrzeugteil 6 vorbeigesprüht wird oder ein sehr kleiner Bereich nicht vollständig mit Reinigungsflüssigkeit beaufschlagt wird.

Bei einem weiteren Ausführungsbeispiel ist der zweite untere Schenkel 2-2 horizontal ausgerichtet, d. h. parallel zur x-Richtung, der erste obere Schenkel 1-1 ist jedoch in der x-y-Ebene nach unten geneigt, d. h. er schließt einen Winkel mit der x-Richtung ein. Dieser Winkel ist in einem Bereich von 6 Grad bis 8 Grad, insbesondere ist dieser Winkel 8 Grad.

Dieses Ausführungsbeispiel ist insbesondere dann vorteilhaft, wenn die Vorrichtung in einer Fahrzeugwaschanlage eingesetzt wird, in welcher Fahrzeuge mit unterschiedlichen Felgengrößen bzw. Radgrößen gereinigt werden. Durch die horizontale Ausrichtung des zweiten unteren Schenkels 2-2 schneidet dieser Schenkel 2-2 unabhängig von der Radgröße in etwa immer den unteren Rand der Fahrzeugfelge 7, sofern die untere Düse 2 in Höhe dieses unteren Rands angeordnet ist und näherungsweise angenommen wird, dass dieser untere Rand unabhängig von der Radgröße bzw. der Felgengröße in etwa immer denselben Abstand vom Boden hat. Der erste obere Schenkel 1-1 trifft hingegen auf das Fahrzeugrad bzw. die Fahrzeugfelge 7 in einer vertikalen Position, die vom horizontalen Abstand des Fahrzeugrads von den Düsen 1 und 2 abhängt. Üblicherweise ist jedoch dieser horizontale Abstand der Fahrzeugfelge 7 von den Düsen bei Fahrzeugen mit großer Spurweite kleiner als bei Fahrzeugen mit geringerer Spurweite. Gleichzeitig haben Fahrzeuge mit großer Spurweite üblicherweise einen größeren Felgendurchmesser als Fahrzeuge mit geringerer Spurweite. Dies führt dazu, dass in einer Fahrzeugwaschanlage große Fahrzeugfelgen 7 einen geringeren horizontalen Abstand von den Düsen haben als kleinere Fahrzeugfelgen 7. Da nun die erste obere Schenkel 1-1 auf eine horizontale näher an den Düsen 1 und 2 angeordnete Fahrzeugfelge weiter oben trifft und auf eine horizontale weiter von den Düsen 1 und 2 weg angeordnete Fahrzeugfelge 7 weiter unten trifft, gleicht die Neigung des ersten oberen Schenkels 1-1 in einer Fahrzeugwaschanlage die unterschiedlichen Positionen und Größen verschiedener Fahrzeugfelgen 7 so aus, dass die Fahrzeugfelgen 7 im Wesentlichen unabhängig von ihrer Größe vollständig besprüht werden können, ohne dass Reinigungsflüssigkeit an den Fahrzeugfelgen 7 vorbei gesprüht wird.

Wenn sich die zu reinigende Fläche des Fahrzeugteils 6 nicht senkrecht zur x-Richtung oder senkrecht zum ersten oberen Schenkel 1-1 erstreckt, sondern eine gekrümmte Fläche ist, gelten die vorstehenden Ausführungen entsprechend, wobei sich in diesem Fall gewisse Änderungen hinsichtlich des idealen horizontalen Abstandsbereichs des Fahrzeugteils 6 ergeben können.

Bei einem weiteren Ausführungsbeispiel sind die Düsen 1, 2 rotierbar um eine Achse angeordnet, welche sich in x-Richtung erstreckt und welche den Schnittpunkt g schneidet. Die erste und zweite Versorgungsleitung 4 und 5 sind in diesem Fall so mit den Düsen 1 und 2 gekoppelt, dass eine solche Rotation der Düsen 1 und 2 möglich ist. In diesem Fall kann eine Fläche mit Reinigungsflüssigkeit mittels der Düsen 1 und 2 besprüht werden, welche in der y-z-Ebene kreisscheibenförmig ist.

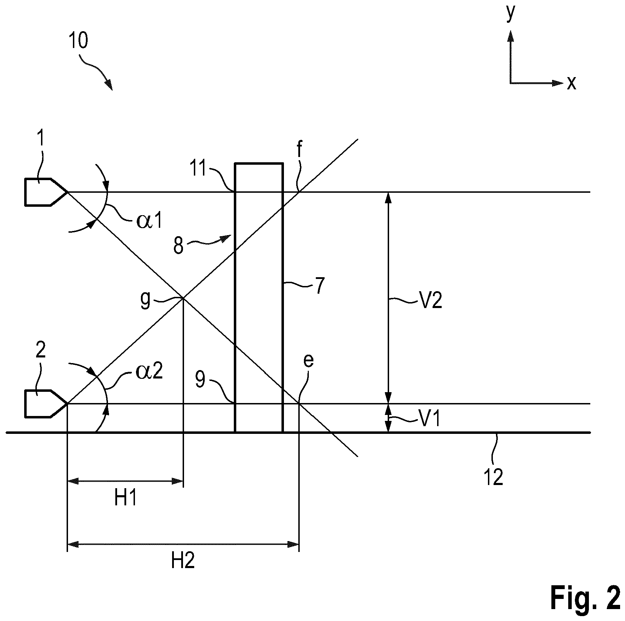

Fig. 2 zeigt eine Fahrzeugwaschanlage, welche die vorstehend beschriebene Vorrichtung 10 zum Aufbringen einer Reinigungsflüssigkeit umfasst. Es wird dabei nur ein Ausschnitt der Fahrzeugwaschanlage und von der Vorrichtung 10 nur die obere Düse 1 und die untere Düse 2 gezeigt.

Bei der Fahrzeugwaschanlage kann es sich um eine an sich bekannte Portalwaschanlage oder eine Waschstraße handeln. Die Vorrichtung 10 ist in diesem Fall dafür vorgesehen, die nach außen gewandte Fläche 8 einer Felge 7 eines Fahrzeugs mit Reinigungsflüssigkeit zu besprühen. Anschließend kann die Fläche 8 in der Fahrzeugwaschanlage mit einer Felgenbürste gereinigt werden. Die Düsen 1 und 2 der Vorrichtung 10 sind dabei in vertikaler y-Richtung so angeordnet, dass eine Felge 7 gereinigt wird, deren untere Kante 9 der zu reinigenden Fläche 8 sich im Abstand V1 über einem Boden 12 befindet und bei der zwischen der unteren Kante 9 und der oberen Kante 11 der zu reinigenden Fläche 8 einen vertikalen Abstand V2 in y-Richtung aufweist. Der Abstand V1 ist dabei beispielsweise 60 mm und der Abstand V2 520 mm, so dass sich die obere Kante 11 der zu reinigenden Fläche 8 580 mm über dem Boden 12 befindet.

Die obere Düse 1 der Vorrichtung 10 ist bei der Fahrzeugwaschanlage in diesem Fall in y-Richtung in einem Abstand über dem Boden 12 angeordnet, welcher der Summe der Abstände V1 und V2 entspricht, die untere Düse 2 ist in einem Abstand in y-Richtung über dem Boden 12 angeordnet, der dem Abstand V1 entspricht. Die Öffnungswinkel α1 und α2 sind so gewählt, dass der horizontale Abstand in x-Richtung des Schnittpunkts b von der Position der Austrittsöffnungen der Düsen 1 und 2 H1 ist und der horizontale Abstand H2 des Schnittpunkts f, welcher sich in x-Richtung näher an den Düsen 1 und 2 als der Schnittpunkt e befindet, H2 ist. Der horizontale Abstand H1 ist beispielsweise 300 mm und der horizontale Abstand H2 650 mm. Es ergibt sich somit zwischen den Abständen H1 und H2 ein Toleranzbereich in x-Richtung mit der Länge 350 mm, in welchem die zu reinigende Fläche 8 der Felge 7 angeordnet sein kann, ohne dass Reinigungsflüssigkeit an dieser zu reinigenden Fläche 8 vorbeigesprüht wird, wobei gleichzeitig die zu reinigende Fläche 8 vollständig mit Reinigungsflüssigkeit von den Düsen 1 und 2 beaufschlagt wird.

Bei einem weiteren Ausführungsbeispiel können die Düsen 1 und 2 in vertikaler y-Richtung verschiebbar angeordnet sein. Ferner kann bei diesen Ausführungsbeispielen der Durchmesser der Felge 7, d. h. der Abstand V2 und die Größe des Rades des Fahrzeugs erfasst werden, so dass auch der Abstand V1 berechnet werden kann. Hierzu kann beispielsweise ein Sensor vorgesehen sein. Alternativ kann die Felgengröße und Radgröße auch als Datensatz an die Fahrzeugwaschanlage übertragen werden. Die Position der Austrittsöffnungen der Düsen 1 und 2 in y-Richtung kann dann jeweils so verschoben werden, dass die untere Düse 2 in einer Höhe V1 angeordnet ist und die obere Düse bei einer Höhe angeordnet ist, die sich aus der Summe der Abstände V1 und V2 ergibt.

Im Folgenden wird ein Ausführungsbeispiel des erfindungsgemäßen Verfahrens zum Aufbringen einer Reinigungsflüssigkeit auf ein Fahrzeugteil 6 beschrieben:
Eine Vorrichtung 10 ist, wie vorstehend beschrieben, in einer Fahrzeugwaschanlage, beispielsweise einer Portalwaschanlage, angeordnet. Die Düsen 1 und 2 sind dabei im unteren Bereich des Portals in Höhe des zu reinigenden Fahrzeugteils 6 angeordnet, im vorliegenden Ausführungsbeispiel in Höhe der Fahrzeugfelge 7, wie es mit Bezug zu Fig. 2 beschrieben wurde. Die Position einer Felge 7 wird mittels eines Sensors erfasst und das Portal wird so in z-Richtung zu der Felge 7 bewegt, dass die Position der Achse der Felge 7 in z-Richtung mit der Position der Düsen 1 und 2 in z-Richtung zusammenfällt.

Optional wird der Radtyp und Felgentyp des zu reinigenden Fahrzeugs erfasst. Hieraus werden die Abstände V1 und V2 bestimmt. Wenn die Düsen 1 und 2 in vertikaler y-Richtung bewegbar sind, werden sie in der Höhe so positioniert, wie es mit Bezug zu Fig. 2 erläutert wurde und wie es in Fig. 2 gezeigt ist.

Anschließend wird Reinigungsflüssigkeit über die Ausstoßöffnungen der Düsen 1 und 2 in Richtung der zu reinigenden Fläche 8 der Felge 7 mit der ersten Sprühgeometrie 1-2 und der zweiten Sprühgeometrie 2-3 ausgestoßen. Dabei wird die Reinigungsflüssigkeit nicht nur in der x-y-Ebene ausgestoßen, sondern auch in die positive und negative z-Richtung, so dass die zu reinigende Fläche 8 der Felge 7 vollständig mit Reinigungsflüssigkeit besprüht wird. Die zu reinigende Fläche 8 befindet sich dabei in einem horizontalen Abstand in x-Richtung von den Düsen 1 und 2, der zwischen dem Abstand H1 und dem Abstand H2 liegt.

Falls in z-Richtung die zu reinigende Fläche nicht vollständig erfasst wird, wird das Portal in z-Richtung hin und her bewegt, so dass die gesamte zu reinigende Fläche 8 mit Reinigungsflüssigkeit besprüht wird.

Falls die obere und die untere Düse 1, 2 in z-Richtung versetzt zueinander angeordnet sind, werden die Düsen 1, 2 so angesteuert, dass Reinigungsflüssigkeit über die Düsen 1, 2 zeitversetzt ausgestoßen wird. Dabei erfolgt das Ausstoßen der Reinigungsflüssigkeit jeweils zu einem Zeitpunkt, zu dem die Position der Felgenachse in z-Richtung mit der Position der jeweiligen Düse 1, 2 übereinstimmt. Um die Düsen 1, 2 zeitversetzt ansteuern zu können, sind in diesem Fall elektronisch steuerbare Ventile in der ersten und zweiten Versorgungsleitung 4, 5 angeordnet, welche mit einer Steuervorrichtung gekoppelt sind, welche wiederum mit dem Sensor zum Erfassen der Position des Fahrzeugs in z-Richtung gekoppelt ist.

Wenn die Düsen 1, 2 hingegen wie vorstehend beschrieben rotierbar um eine Achse angeordnet sind, welche sich in x-Richtung erstreckt und welche den Schnittpunkt g schneidet, kann die kreisscheibenförmige Felge 7 vollständig mit Reinigungsflüssigkeit beaufschlagt werden, wenn sich die Felgenachse in z-Richtung bei der Position der beiden Düsen 1 und 2 in z-Richtung befindet.

### Bezugszeichenliste

- 1: erste Düse
- 1-1: erster oberer Schenkel
- 1-2: erste unterer Schenkel
- 1-3: erste Sprühgeometrie
- 2: zweite Düse
- 2-1: zweiter oberer Schenkel
- 2-2: erste unterer Schenkel
- 2-3: zweite Sprühgeometrie
- 3: zentrale Versorgungsleitung
- 4: erste Versorgungsleitung
- 5: zweite Versorgungsleitung
- 6: Fahrzeugteil
- 7: Felge
- 8: zu reinigende Fläche der Felge 7
- 9: untere Kante
- 10: Vorrichtung
- 11: obere Kante
- 12: Boden

## Patentansprüche

1. Vorrichtung (10) zum Aufbringen einer Reinigungsflüssigkeit auf ein Fahrzeugteil (6),
wobei die Vorrichtung eine obere Düse (1) zum Ausstoßen von Reinigungsflüssigkeit in einer ersten Sprühgeometrie (1-3) umfasst,
wobei die erste Sprühgeometrie (1-3) in einem ersten vertikalen Querschnitt ausgehend von der oberen Düse (1) von einem ersten oberen Schenkel (1-1) und einem ersten unteren Schenkel (1-2) begrenzt ist, die einen ersten Öffnungswinkel (α1) miteinander einschließen,
wobei die Vorrichtung (10) eine untere Düse (2) zum Ausstoßen von Reinigungsflüssigkeit in einer zweiten Sprühgeometrie (2-3) umfasst,
wobei die zweite Sprühgeometrie (2-3) in einem zweiten vertikalen Querschnitt ausgehend von der unteren Düse (2) von einem zweiten oberen Schenkel (2-1) und einem zweiten unteren Schenkel (2-2) begrenzt ist, die einen zweiten Öffnungswinkel (α2) miteinander einschließen,
wobei die obere Düse (1) in vertikaler Richtung beabstandet oberhalb von der unteren Düse (2) angeordnet ist,
**dadurch gekennzeichnet, dass**
in einer vertikalen Projektion eine durch den ersten oberen Schenkel (1-1) verlaufende erste Gerade (G1) mit einer durch den zweiten unteren Schenkel (2-2) verlaufenden zweiten Geraden (G2) einen Winkel einschließt, der kleiner als 10 Grad ist, und der erste untere Schenkel (1-2) den zweiten oberen Schenkel (2-1) in Ausstoßrichtung der Reinigungsflüssigkeit schneidet,
wobei der erste obere Schenkel (1-1) und/oder der zweite untere Schenkel (2-2) horizontal ausgerichtet ist/sind.

2. Vorrichtung (10) nach Anspruch 1,
**dadurch gekennzeichnet, dass**
dass der erste und der zweite vertikale Querschnitt zusammenfallen.

3. Vorrichtung (10) nach Anspruch 1,
**dadurch gekennzeichnet, dass**
dass der erste vertikale Querschnitt beabstandet von dem zweiten vertikalen Querschnitt angeordnet ist und die obere Düse (1) in vertikaler Richtung und/oder in horizontaler Richtung beabstandet von der unteren Düse (2) angeordnet ist.

4. Vorrichtung (10) nach einem der vorhergehenden Ansprüche,
**dadurch gekennzeichnet, dass**
der erste obere Schenkel (1-1) und der zweite untere Schenkel (2-2) parallel zueinander ausgerichtet sind.

5. Vorrichtung (10) nach einem der vorhergehenden Ansprüche,
**dadurch gekennzeichnet, dass**
der erste und/oder zweite Öffnungswinkel (α1) in einem Bereich von 30 Grad bis 50 Grad ist/sind, insbesondere in einem Bereich von 35 Grad bis 45 Grad ist/sind.

6. Vorrichtung (10) nach einem der vorhergehenden Ansprüche,
**dadurch gekennzeichnet, dass**
der zweite untere Schenkel (2-2) horizontal ausgerichtet ist und der erste obere Schenkel (1-1) um einen Winkel nach unten geneigt ist, der in einem Bereich von 6 Grad bis 10 Grad liegt.

7. Vorrichtung (10) nach einem der vorhergehenden Ansprüche,
**dadurch gekennzeichnet, dass**
die obere (1) und/oder untere Düse (2) einer Vollkegeldüse und/oder eine Flachstrahldüse ist.

8. Vorrichtung (10) nach einem der vorhergehenden Ansprüche,
**dadurch gekennzeichnet, dass**
die Düsen (1, 2) in Bezug auf die Vorrichtung (10) stationär sind oder rotierbar um eine Achse angeordnet sind, welche horizontal ausgerichtet ist.

9. Vorrichtung (10) nach Anspruch 8,
**dadurch gekennzeichnet, dass**
die Achse einen Schnittpunkt des ersten unteren Schenkels (1-2) mit dem zweiten oberen Schenkel (2-1) schneidet.

10. Vorrichtung (10) nach einem der vorhergehenden Ansprüche,
**dadurch gekennzeichnet, dass**
eine zusammengesetzte Sprühgeometrie des ersten und zweiten vertikalen Querschnitts, welche sich aus der ersten Sprühgeometrie (1-3) und der zweiten Sprühgeometrie (2-3) zusammensetzt, spiegelsymmetrisch ist.

11. Fahrzeugwaschanlage mit einer Vorrichtung (10) nach einem der vorhergehenden Ansprüche zum Reinigen zumindest einer Felge (7) eines zu reinigenden Fahrzeugs, wobei der vertikale Abstand (V) der oberen Düse (1) von der unteren Düse (2) dem Durchmesser (V2) der zu reinigenden Felge (7) entspricht und der Abstand der oberen Düse (1) von einem Boden dem Abstand der oberen Kante (11) der Felge (7) vom Boden (12) entspricht und der Abstand der unteren Düse (2) vom Boden (12) dem Abstand (V2) der unteren Kante (9) der Felge (7) vom Boden (12) entspricht.

12. Verfahren zum Aufbringen einer Reinigungsflüssigkeit auf ein Fahrzeugteil (6), bei dem
mittels einer oberen Düse (1) Reinigungsflüssigkeit in einer ersten Sprühgeometrie (1-3) in Richtung des zu reinigenden Fahrzeugteils (6) ausgestoßen wird, wobei die erste Sprühgeometrie (1-3) in einem ersten vertikalen Querschnitt ausgehend von der oberen Düse (1) von einem ersten oberen Schenkel (1-1) und einen erstem unteren Schenkel (1-2) begrenzt ist, die einen ersten Öffnungswinkel (α1) miteinander einschließen, und
mittels einer unteren, vertikal von der oberen Düse (1) beabstandeten Düse (2) Reinigungsflüssigkeit in einer zweiten Sprühgeometrie (2-3) in Richtung des zu reinigenden Fahrzeugteils (6) ausgestoßen wird, wobei die zweite Sprühgeometrie (2-3) in einem zweiten vertikalen Querschnitt ausgehend von der unteren Düse (2) von einem zweiten oberen Schenkel (2-1) und einem zweiten unteren Schenkel (2-2) begrenzt ist, die einen zweiten Öffnungswinkel (α2) miteinander einschließen,
wobei in einer vertikalen Projektion eine durch den ersten oberen Schenkel (1-1) verlaufende erste Gerade (G1) mit einer durch den zweiten unteren Schenkel (2-2) verlaufenden zweiten Geraden (G2) einen Winkel einschließt, der kleiner als 10 Grad ist, und der erste untere Schenkel (1-2) den zweiten oberen Schenkel (2-1) in Ausstoßrichtung der Reinigungsflüssigkeit schneidet,
wobei der erste obere Schenkel (1-1) und/oder der zweite untere Schenkel (2-2) horizontal ausgerichtet ist/sind.

13. Verfahren nach Anspruch 12,
**dadurch gekennzeichnet, dass**
die vertikale Position einer oberen Kante (11) des zu reinigenden Fahrzeugteils (6) und/oder die vertikale Position einer unteren Kante (9) des zu reinigenden Fahrzeugteils (6) bestimmt werden und die vertikale Position der oberen Düse (1) so eingestellt wird, dass sie der vertikalen Position der oberen Kante (11) des zu reinigenden Fahrzeugteils (6) entspricht, und/oder die vertikale Position der unteren Düse (2) so eingestellt wird, dass sie der vertikalen Position der unteren Kante (9) des zu reinigenden Fahrzeugteils (6) entspricht.

14. Verfahren nach Anspruch 13,
**dadurch gekennzeichnet, dass**
der erste untere Schenkel (1-2) oberhalb der unteren Kante (9) des zu reinigenden Fahrzeugteils (6) auf das zu reinigende Fahrzeugteil (6) trifft.

15. Verfahren nach Anspruch 13 oder 14,
**dadurch gekennzeichnet, dass**
der zweite obere Schenkel (2-1) unterhalb der oberen Kante (11) des zu reinigenden Fahrzeugteils (6) auf das zu reinigende Fahrzeugteil (6) trifft.

## Claims

1. Device (10) for applying a cleaning liquid to a vehicle part (6),
wherein the device comprises an upper nozzle (1) for discharging cleaning liquid in a first spray geometry (1- 3),
wherein the first spray geometry (1- 3) is delimited in a first vertical cross-section starting from the upper nozzle (1), by a first upper side piece (1-1) and a first lower side piece (1-2) that enclose a first opening angle (α1) with one another,
wherein the device (10) comprises a lower nozzle (2) for discharging cleaning liquid in a second spray geometry (2- 3),
wherein the second spray geometry (2-3) is delimited in a second vertical cross-section starting from the lower nozzle (2), by a second upper side piece (2-1) and a second lower side piece (2-2) that enclose a second opening angle (α2) with one another,
wherein the upper nozzle (1) is arranged in the vertical direction at a distance above the lower nozzle (2),
**characterised in that**
in a vertical projection, a first straight line (G1) extending through the first upper side piece (1-1) encloses an angle with a second straight line (G2) extending through the second lower side piece (2-2) that is less than 10 degrees, and the first lower side piece (1-2) intersects the second upper side piece (2-1) in the discharge direction of the cleaning liquid,
wherein the first upper side piece (1-1) and/or the second lower side piece (2-2) is/are horizontally orientated.

2. Device (10) according to claim 1,
**characterised in that**
the first and the second vertical cross-section coincide.

3. Device (10) according to claim 1,
**characterised in that**
the first vertical cross-section is arranged at a distance from the second vertical cross-section and the upper nozzle (1) is arranged in the vertical direction and/or in the horizontal direction at a distance from the lower nozzle (2).

4. Device (10) according to one of the preceding claims,
**characterised in that**
the first upper side piece (1-1) and the second lower side piece (2-2) are orientated parallel to one another.

5. Device (10) according to one of the preceding claims,
**characterised in that**
the first and/or second opening angle (α1) is/are in a range of 30 degrees to 50 degrees, in particular in a range of 35 degrees to 45 degrees.

6. Device (10) according to one of the preceding claims,
**characterised in that**
the second lower side piece (2-2) is horizontally orientated and the first upper side piece (1-1) is inclined downwards by an angle, which is in a range of 6 degrees to 10 degrees.

7. Device (10) according to one of the preceding claims,
**characterised in that**
the upper (1) and/or lower nozzle (2) is a full-cone nozzle and/or a flat jet nozzle.

8. Device (10) according to one of the preceding claims,
**characterised in that**
the nozzles (1, 2) are stationary in relation to the device (10) or arranged rotatably around an axis, which is horizontally orientated.

9. Device (10) according to claim 8,
**characterised in that**
the axis intersects a point of intersection of the first lower side piece (1-2) with the second upper side piece (2-1).

10. Device (10) according to one of the preceding claims,
**characterised in that**
a composite spray geometry of the first and second vertical cross-sections, which is composed of the first spray geometry (1-3) and the second spray geometry (2-3), is mirror-symmetrical.

11. Vehicle washing installation with a device (10) according to one of the preceding claims for cleaning at least one rim (7) of a vehicle to be cleaned, wherein the vertical distance (V) of the upper nozzle (1) from the lower nozzle (2) corresponds to the diameter (V2) of the rim (7) to be cleaned and the distance of the upper nozzle (1) from a ground corresponds to the distance of the upper edge (11) of the rim (7) from the ground (12), and the distance of the lower nozzle (2) from the ground (12) corresponds to the distance (V2) of the upper edge (9) of the rim (7) from the ground (12).

12. Method for applying a cleaning liquid to a vehicle part (6), in which
cleaning liquid is discharged by means of an upper nozzle (1) in a first spray geometry (1-3) in the direction of the vehicle part to be cleaned (6), wherein the first spray geometry (1- 3) is delimited in a first vertical cross-section starting from the upper nozzle (1), by a first upper side piece (1-1) and a first lower side piece (1-2) that enclose a first opening angle (α1) with one another, and
cleaning liquid is discharged by means of a lower nozzle (2) vertically spaced from the upper nozzle (1) in a second spray geometry (2-3) in the direction of the vehicle part to be cleaned (6), wherein the second spray geometry (2- 3) is delimited in a second vertical cross-section starting from the upper nozzle (2), by a second upper side piece (2-1) and a second lower side piece (2-2) that enclose a second opening angle (α2) with one another,
wherein in a vertical projection, a first straight line (G1) extending through the first upper side piece (1-1) encloses an angle with a second straight line (G2) extending through the second lower side piece (2-2) that is less than 10 degrees, and the first lower side piece (1-2) intersects the second upper side piece (2-1) in the discharge direction of the cleaning liquid,
wherein the first upper side piece (1-1) and/or the second lower side piece (2-2) is/are horizontally orientated.

13. Method according to claim 12,
**characterised in that**
the vertical position of an upper edge (11) of the vehicle part to be cleaned (6) and/or the vertical position of a lower edge (9) of the vehicle part to be cleaned are determined, and the vertical position of the upper nozzle (1) is adjusted to correspond to the vertical position of the upper edge (11) of the vehicle part to be cleaned (6) and/or the vertical position of the lower nozzle (2) is adjusted to correspond to the vertical position of the lower edge (9) of the vehicle part to be cleaned (6).

14. Method according to claim 13,
**characterised in that**
the first lower side piece (1-2) comes into contact with the vehicle part to be cleaned (6) above the lower edge (9) of the vehicle part to be cleaned (6).

15. Method according to claim 13 or 14,
**characterised in that**
the second lower side piece (2-1) comes into contact with the vehicle part to be cleaned (6) below the upper edge (11) of the vehicle part to be cleaned (6).

## Revendications

1. Dispositif (10) permettant d'appliquer un liquide de nettoyage sur un élément de véhicule (6),
ledit dispositif comprenant une buse supérieure (1) destinée à expulser du liquide de nettoyage selon une première forme de jet (1-3),
ladite première forme de jet (1-3), selon une première coupe transversale verticale, étant délimitée, en partant de la buse supérieure (1), par un premier tronçon supérieur (1-1) et un premier tronçon inférieur (1-2) qui forment entre eux un premier angle d'ouverture (α1),
ledit dispositif (10) comprenant une buse inférieure (2) destinée à expulser du liquide de nettoyage selon une deuxième forme de jet (2-3),
ladite deuxième forme de jet (2-3), selon une deuxième coupe transversale verticale, étant délimitée, en partant de la buse inférieure (2), par un deuxième tronçon supérieur (2-1) et un deuxième tronçon inférieur (2-2) qui forment entre eux un deuxième angle d'ouverture (α2),
ladite buse supérieure (1), vue dans le sens de la verticale, étant espacée au-dessus de la buse inférieure (2),
**caractérisé en ce que**
selon une projection verticale, une première droite (G1) passant par le premier tronçon supérieur (1-1) forme un angle, avec une deuxième droite (G2) passant par le deuxième tronçon inférieur (2-2), qui est inférieur à 10 degrés, et le premier tronçon inférieur (1-2) coupe le deuxième tronçon supérieur (2-1) dans la direction d'expulsion du liquide de nettoyage,
ledit premier tronçon supérieur (1-1) et/ou ledit deuxième tronçon inférieur (2-2) étant orientés horizontalement.

2. Dispositif (10) selon la revendication 1,
**caractérisé en ce que**
la première et la deuxième coupe transversale verticale coïncident.

3. Dispositif (10) selon la revendication 1,
**caractérisé en ce que**
la première coupe transversale verticale est espacée de la deuxième coupe transversale verticale, et la buse supérieure (1), vue dans le sens de la verticale et/ou dans le sens de l'horizontale, est espacée de la buse inférieure (2).

4. Dispositif (10) selon l'une quelconque des revendications précédentes,
**caractérisé en ce que**
le premier tronçon supérieur (1-1) et le deuxième tronçon inférieur (2-2) sont parallèles.

5. Dispositif (10) selon l'une quelconque des revendications précédentes,
**caractérisé en ce que**
le premier et/ou le deuxième angle d'ouverture (α1) sont compris dans une plage de 30 à 50 degrés, notamment dans une plage de 35 à 45 degrés.

6. Dispositif (10) selon l'une quelconque des revendications précédentes,
**caractérisé en ce que**
le deuxième tronçon inférieur (2-2) est horizontal et le premier tronçon supérieur (1-1) est incliné vers le bas selon un angle compris dans une plage de 6 à 10 degrés.

7. Dispositif (10) selon l'une quelconque des revendications précédentes,
**caractérisé en ce que**
la buse supérieure (1) et/ou inférieure (2) consistent en une buse à jet à cône plein et/ou une buse à jet plat.

8. Dispositif (10) selon l'une quelconque des revendications précédentes,
**caractérisé en ce que**
les buses (1, 2) sont fixes par rapport au dispositif (10) ou rotatives sur un axe orienté à l'horizontale.

9. Dispositif (10) selon la revendication 8,
**caractérisé en ce que**
l'axe coupe un point d'intersection du premier tronçon inférieur (1-2) avec le deuxième tronçon supérieur (2-1).

10. Dispositif (10) selon l'une quelconque des revendications précédentes,
**caractérisé en ce que**
une forme de jet de la première et de la deuxième coupe transversale verticale, qui est une forme composée associant la première forme de jet (1-3) et la deuxième forme de jet (2-3), est à symétrie spéculaire.

11. Installation de lavage de véhicule dotée d'un dispositif (10) selon l'une quelconque des revendications précédentes pour nettoyer au moins une jante (7) d'un véhicule à nettoyer, la distance verticale (V) de la buse supérieure (1) à la buse inférieure (2) correspondant au diamètre (V2) de la jante (7) à nettoyer et la distance de la buse supérieure (1) au sol correspondant à la distance du bord supérieur (11) de la jante (7) au sol (12) et la distance de la buse inférieure (2) au sol (12) correspondant à la distance (V2) du bord inférieur (9) de la jante (7) au sol (12).

12. Procédé permettant d'appliquer un liquide de nettoyage sur un élément de véhicule (6), dans le cadre duquel :
du liquide de nettoyage est expulsé au moyen d'une buse supérieure (1), selon une première forme de jet (1-3), en direction de l'élément de véhicule (6) à nettoyer, ladite première forme de jet (1-3), selon une première coupe transversale verticale, étant délimitée, en partant de la buse supérieure (1), par un premier tronçon supérieur (1-1) et un premier tronçon inférieur (1-2) qui forment entre eux un premier angle d'ouverture (α1), et
du liquide de nettoyage est expulsé au moyen d'une buse inférieure (2) verticalement espacée de la buse supérieure (1), selon une deuxième forme de jet (2-3), en direction de l'élément de véhicule (6) à nettoyer, ladite deuxième forme de jet (2-3), selon une deuxième coupe transversale verticale, étant délimitée, en partant de la buse inférieure (2), par un deuxième tronçon supérieur (2-1) et un deuxième tronçon inférieur (2-2) qui forment entre eux un deuxième angle d'ouverture (α2),
sachant que, selon une projection verticale, une première droite (G1) passant par le premier tronçon supérieur (1-1) forme un angle, avec une deuxième droite (G2) passant par le deuxième tronçon inférieur (2-2), qui est inférieur à 10 degrés, et le premier tronçon inférieur (1-2) coupe le deuxième tronçon supérieur (2-1) dans la direction d'expulsion du liquide de nettoyage,
ledit premier tronçon supérieur (1-1) et/ou ledit deuxième tronçon inférieur (2-2) étant orientés horizontalement.

13. Procédé selon la revendication 12,
**caractérisé en ce que**
la position verticale d'un bord supérieur (11) de l'élément de véhicule (6) à nettoyer et/ou la position verticale d'un bord inférieur (9) de l'élément de véhicule (6) à nettoyer sont déterminées, et la position verticale de la buse supérieure (1) est ajustée de manière à correspondre à la position verticale du bord supérieur (11) de l'élément de véhicule (6) à nettoyer, et/ou la position verticale de la buse inférieure (2) est ajustée de manière à correspondre à la position verticale du bord inférieur (9) de l'élément de véhicule (6) à nettoyer.

14. Procédé selon la revendication 13,
**caractérisé en ce que**
le premier tronçon inférieur (1-2) situé au-dessus du bord inférieur (9) de l'élément de véhicule (6) à nettoyer vient frapper l'élément de véhicule (6) à nettoyer.

15. Procédé selon la revendication 13 ou 14,
**caractérisé en ce que**
le deuxième tronçon supérieur (2-1) situé en dessous du bord supérieur (11) de l'élément de véhicule (6) à nettoyer vient frapper l'élément de véhicule (6) à nettoyer.
